# EUROPÄISCHE PATENTSCHRIFT

(11) **EP 3 221 940 B1**
(45) Veröffentlichungstag und Bekanntmachung des Hinweises auf die Patenterteilung: **29.04.2020**
(21) Anmeldenummer: 15825913.5
(22) Anmeldetag: 16.11.2015
(51) Int. Cl.: H02G 3/22, F16L 5/10, F16L 5/14

(54) **LEITUNGSDURCHFÜHRUNG**
CABLE FEEDTHROUGH
PASSAGE POUR CONDUITE

(30) Priorität: 18.11.2014 DE 102014016890
(43) Veröffentlichungstag der Anmeldung: 27.09.2017
(73) Patentinhaber: Jacob Gmbh Elektrotechnische Fabrik, 71394 Kernen (DE)
(72) Erfinder: SOHN, Wolfgang, 71549 Auenwald (DE)
(74) Vertreter: Jendricke, Susann
(86) Internationale Anmeldenummer: PCT/DE2015/000541
(87) Internationale Veröffentlichungsnummer: WO 2016/078631

(56) Entgegenhaltungen:
- WO-A1-2009/005416
- WO-A1-2009/022960
- NL-C2- 1 028 341
- NZ-A- 534 101

## Beschreibung

Die Erfindung betrifft eine Leitungsdurchführung zur Festlegung in einer Wandöffnung, umfassend mindestens zwei miteinander verbindbare Module und mindestens eine Durchtrittsöffnung zur Durchführung einer Leitung, wobei die Durchtrittsöffnung im montierten Zustand durch Aussparungen zweier benachbarter Module gebildet ist, wobei die Module Verbindungsmittel zur Ausbildung einer kraft- und formschlüssigen Verbindung zwischen zwei benachbarten Modulen verklemmt ist und wobei die Verbindungsmittel außerhalb der Wandöffnung betätigbar sind.

Leitungsdurchführungen der in Rede stehenden Art werden auch als Kabeldurchführungen oder Gehäusedurchführungen bezeichnet. Sie werden zum Halten und Abdichten von z.B. Kabeln, Leitungen, Kabelschutzschläuchen oder Schläuchen für den Stofftransport verwendet.

Diese Durchführungen weisen mehrere Durchtrittsöffnungen zum Durchführen von Leitungen auf und werden in der Wandöffnung eines Maschinen- oder Gerätegehäuses oder eines Schaltschranks montiert. Im Hinblick auf die Montage einer größeren Anzahl von Leitungen ersetzen Leitungsdurchführungen herkömmliche Kabelverschraubungen oder Schlauchverschraubungen, da sie gegenüber der Verwendung einzelner Kabelverschraubungen oder Schlauchverschraubungen weniger platzaufwendig und weniger teuer sind.

Leitungsdurchführungen realisieren in Bezug auf die durchgeführten Leitungen deren Zugentlastung und Abdichtung. Sie ermöglichen es, Leitungen, die mit einer Kupplung oder einem Stecker o. ä. vorkonfektioniert sind, durch die Wandöffnung in das Innere des Gehäuses oder des Schaltschranks einzuführen, ohne dass die Kupplung oder der Stecker von der Leitung gelöst werden muss. Sie haben außerdem die Aufgabe, die Wandöffnung des Schaltschrankes nach dem Einführen der Leitungen zu verschließen und abzudichten. Die Wandöffnung ist so groß ausgeführt, dass die Leitungen mit den vorkonfektionierten Kupplungen, Steckern oder dergleichen eingeführt werden können.

Aus der Druckschrift DE 44 34 202 B4 ist eine Kabeldurchführungsleiste bekannt, die aus mehreren Leistenteilen besteht, welche Aussparungen aufweisen, die im montierten Zustand der Leistenteile so zueinander weisen, dass die Durchtrittsöffnungen entstehen. Die bekannte Kabeldurchführungsleiste und deren Leistenteile sind aus einem starren Kunststoff gefertigt. In die Durchtrittsöffnungen sind elastomere Tüllen eingebracht, durch die hindurch das Kabel von außen her eingeführt und zum Inneren des Schaltschranks oder des Maschinengehäuses geführt ist. Durch Zwischenleistenteile kann die Kabeldurchführungsleiste erweitert werden.

Während der Montage werden die einzelnen Leistenteile zunächst über Vormontage-Verbindungskörper so zueinander positioniert, dass die Durchtrittsöffnungen weit auseinander verbringbar sind. Die Leistenteile befinden sich in loser, aber unverlierbarer Verbindung. Zunächst werden die Kabel mit den aufgesteckten Tüllen in die aufgeweiteten Durchtrittsöffnungen eingesetzt und die Tüllen werden positioniert. Zur Ausbildung der kompletten Leitungsdurchführungsleiste werden die verschiedenen positionierten und mit Tüllen und Kabeln bestückten Leistenteile gegeneinandergedrückt und mit Schrauben, die sich über die gesamte Bauhöhe der Leitungsdurchführungsleiste erstrecken, zusammengeschraubt. Schließlich wird die so montierte Leitungsdurchführungsleiste in die Wandöffnung eingesetzt und befestigt.

Die in Rede stehende Kabeldurchführungsleiste ist dahingehend nachteilig, dass die durch alle Leistenteile durchgeführte Schraubbefestigung auf die Gesamtzahl der Leistenteile abgestimmt sein muss und damit letztlich die Schraubenlänge die Anzahl der Leistenteile und damit die Bauhöhe der Kabeldurchführungsleiste und deren Aufnahmekapazität für Kabel vorgibt.

Ein weiterer Nachteil der bekannten Kabeldurchführungsleiste besteht darin, dass die komplette Montage der Kabeldurchführungsleiste zwingend außerhalb der Wandöffnung stattfinden muss, um sie dann in die Wandöffnung einzusetzen. Hierbei kann es dazu kommen, dass die bereits in den noch auseinanderstehenden Leistenteilen vorgesehenen Kabel und Tüllen die Leistenteile wieder auseinanderdrücken und so die Positionierung beeinträchtigt wird.

Zudem hat es sich in der Praxis als nachteilig herausgestellt, dass die zwingende Bestückung aller Leistenteile außerhalb der Wandöffnung die Beweglichkeit der Kabel so eingeschränkt, dass die anschließende Positionierung der Kabeldurchführungsleiste in der Wandöffnung zu Zugkräften in den Kabeln führt, deren Gegenkräfte dauerhaft auf die Befestigung der Leitungsdurchführungsleiste in der Wandöffnung wirken.

Die Druckschrift DE 199 59 185 A1 beschreibt eine zweiteilige Kabeldurchführung. Die beiden Teile weisen zueinander passende Aussparungen auf, die die Durchtrittsöffnungen ausbilden, in denen die Kabel platziert werden. Auch dort werden die Teile erst positioniert, dann mit den Kabeln bestückt und dann über Schrauben verbunden, deren Längenabmessungen der Bauhöhe der Kabeldurchführung entsprechen.

Aus der Druckschrift US 3 742 119 ergibt sich eine flüssigkeitsdichte, dreiteilige Kabeldurchführung, die mit einer Gehäusewandung zusammenwirkt, die speziell auf die dortige Kabelverschraubung abgestimmt ist. Die Wandung umfasst zwei Pfosten, die eine U-förmige, nach oben öffnende Aussparung umrahmen. Die drei Teile der Kabeldurchführung werden auf die Pfosten aufgesteckt. Die feste Verbindung der Kabeldurchführung mit der Wandung wird durch den Gehäusedeckel erzielt.

Weitere, allerdings einstückige, Kabeldurchführungen mit vorgegebener Bauhöhe sind beispielsweise aus den Druckschriften DE 43 40 343 C1, DE 88 07 280 U1 bekannt. In der Druckschrift DE 10 2005 002 597 B3 ist eine Leitungsdurchführung beschrieben, die einen einstückigen Rahmen umfasst, in dem Dichtungselemente verschieblich geführt sind und Kabelkanäle ausbilden. Auch hier ist die Bauhöhe durch den Rahmen festgelegt.
Die Druckschrift WO 2009/022960 A1 zeigt eine Kabeldurchführung, die aus Modulen aufgebaut ist, wobei die Module derart miteinander verbunden sind, dass die Leitungsmontage in der bereits in der Wandöffnung eingesetzten Leitungsdurchführung nicht erfolgt.

Ein Kabelverteiler, der in einen Untergrund eingelassen wird, ist aus der Druckschrift NL 1 028 341 C2 bekannt. Im Gehäuse des Kabelverteilers sind Module zur Aufnahme von Kabeln angeordnet sind. Die Kabelmontage ist nur möglich, wenn der Kabelverteiler nicht im Untergrund angeordnet ist, ansonsten nicht.

Aus der Druckschrift NZ 534 101 A ist eine Abdeckplatte bekannt, diezwei Hälften mit Verbindungsmitteln und mit einer Aussparung umfasst, durch welche Kabel hindurchführbar sind. Die Abdeckplatte verfügt über Mittel zur Wandmontage. Die Montage einer Leitung in Öffnung kann nur dann stattfinden, wenn die Abdeckplatte nicht an der Wandbefestigt ist.

Eine Befestigungsanordnung mit übereinander geordneten Modulen, die Öffnungen zur Aufnahme von Leitungen ausbilden, ist in der Druckschrift WO 2009 005 416 A1 beschrieben. Dort wird die Bauhöhe durch die Länge der Vertikalverbindungen unveränderlich vorgegeben.

Der Erfindung liegt die Aufgabe zugrunde, eine Leitungsdurchführung der in Rede stehenden Art anzugeben, die eine Vereinfachung der Leitungsmontage in der Leitungsdurchführung und der Leitungsdurchführung in der Wandöffnung ermöglicht. Insbesondere soll die Festlegung der Leitungsdurchführung auf eine vorbestimmte Bauhöhe vermieden werden.
Die voranstehende Aufgabe wird durch die Merkmale des Patentanspruches 1 gelöst. Danach ist eine Leitungsdurchführung der in Rede stehenden Art derart ausgestaltet, dass die Verbindungsmittel auch innerhalb der Wandöffnung betätigbar sind.

Ausgehend vom gattungsbildenden Stand der Technik ist zunächst erkannt worden, dass dort alle Leitungen, Kabel komplett montiert werden müssen und dass die Bauhöhe der zusammengebauten Leitungsdurchführung von der Länge der die Module verbindenden Schrauben bestimmt ist.

Erfindungsgemäß ist erkannt worden, dass die Leitungsmontage vereinfacht werden kann, wenn eine sukzessive Leitungsmontage unter Sicherung bereits montierter Leitungen stattfinden kann. Erfindungsgemäß ist weiter erkannt worden, dass eine sukzessive Leitungsmontage ermöglicht wird, wenn die Module Verbindungsmittel aufweisen, die zwei benachbarte Module direkt fest verbinden und dabei die Leitungen einklemmen. Schließlich ist erfindungsgemäß erkannt worden, dass durch die sukzessive Modulverbindung keine Schrauben, die die Gesamthöhe der Leitungsdurchführung bestimmen, erforderlich sind, sondern dass die Bauhöhe der Leitungsdurchführung allein vom Bedarf an Leitungen abhängt. Durch die Erfindung werden enorme Vorteile im Hinblick auf die Flexibilität des Monteurs und die Vereinfachung der Leitungsmontage erreicht.

Der Monteur legt die Leitungen nur innerhalb von zwei Modulen fest, was mit einer einfachen Handhabbarkeit einhergeht. Zudem muss er sich noch nicht festlegen, wie viele Leitungen in welchen Kombinationen zu montieren sind. Er kann sich im Nachhinein noch korrigieren. Zudem kann er bereits mit Leitungen bestückte und verspannte Nachbarmodule in die Wandöffnung einsetzen und je nach Bedarf außerhalb oder auch in der Wandöffnung weitere Leitungen in die Aussparungen einsetzen, um diese dann mit den Aussparungen des nächsten Moduls zur Durchtrittsöffnung zu ergänzen und dann die Verklemmung der Leitung mittels der Verbindungsmittel vornehmen. Die durch die erfindungsgemäße Leitungsdurchführung gewährte Wahlmöglichkeit, die Leitungsmontage zwischen zwei Modulen innerhalb oder außerhalb der Wandöffnung vorzunehmen, geht einher mit einer hohen Beweglichkeit der Leitungen und einer Verringerung der Zugkräfte in Bezug auf die in der Wandöffnung befestigte Leitungsdurchführung. Schließlich ist erfindungsgemäß erkannt worden, dass mit der erfindungsgemäßen Leitungsdurchführung gleichzeitig einerseits außerhalb der Wandöffnung eine Bestückung der Module mit Tüllen / Leitungen sowie deren Verbindung erfolgen kann und andererseits innerhalb der Wandöffnung durch Einsetzen und Befestigen der Module, Bestücken der Module und Verbinden benachbarter Module gearbeitet werden kann. Da die Verbindungsmittel sowohl außerhalb als auch innerhalb der Wandöffnung betätigbar sind, kann der Monteur entscheiden, ob er, wenn er bereits an dem in der Wandöffnung befindlichen Modul arbeitet, entweder sukzessive weitere Module oder bereits vormontierte Baugruppen aus mindestens zwei benachbarten Modulen verbaut.

Die Verbindung zwischen den benachbarten Modulen könnte lösbar sein. Dies ist dahingehend vorteilhaft, dass zwischen zwei Modulen noch keine vollständige Leitungsbestückung erfolgt, sondern nur Tüllen montiert werden. Die Tüllen nehmen die Leitungen auf und dichten sie ab. Wenn später eine Leitung ergänzt werden soll, kann die Verbindung zwischen den Modulen gelöst und die Leitung in die Tülle eingesetzt werden.

Die Module sind in vorteilhafter Weise so beschaffen, dass sie einzeln oder in Verbindung mit weiteren Modulen in die Wandöffnung einsetzbar sind. Diese Wahlmöglichkeit verschafft dem Monteur die Entscheidungsfreiheit hinsichtlich der für ihn besseren Handhabung während der Leitungsmontage. Die zwischen den Modulen wirkenden Verbindungsmittel könnten nach einem bevorzugten Ausführungsbeispiel als Rastmittel vorliegen.

In der Regel erfolgt die Leitungsmontage so, dass die Leitungsdurchführung an der Außenseite der Wand des Gehäuses oder des Maschinenschrankes oder dergleichen anliegt. Daher ist es von Vorteil, wenn die zwischen den Modulen wirkenden Verbindungsmittel bei in die Wandöffnung eingesetzten benachbarten Modulen von der zur Wandöffnung benachbarten Außenseite des Gehäuses oder Schrankes her betätigbar sind. Die Verbindungsmittel könnten beispielsweise einen Schlitz für einen Schraubendreher und/oder eine minimale Abragung zur händischen Betätigung aufweisen. Zum Schutz der Verbindungmittel aber auch des Monteurs könnten die Verbindungsmittel in Ausnehmungen der Module eingearbeitet sein, so dass sie nicht von der Oberfläche des Moduls abstehen. Lediglich minimale punktförmige Erhebungen im Sinne eines Drehknopfes könnten insbesondere zum händischen Rotieren eines Hebels ohne Werkzeug vorgesehen sein. Alternativ zu Rotationsbewegungen könnten auch mit entsprechenden Bauteilen Verschiebebewegungen realisiert werden, um die Module miteinander zu verbinden.

Wie bereits erwähnt, könnten die Verbindungsmittel auch nach der Anordnung der Module in der Wandöffnung betätigt werden. Durch die vorbeschriebene Ausgestaltung der zwischen den Modulen wirkenden Verbindungsmittel ist es möglich, beliebig viele Module miteinander zu verbinden und die Entscheidung über die Anzahl der Module erst bei der Leitungs- und Modulmontage festzulegen. Im Hinblick auf die Anzahl der Aussparungen pro Modul könnten beispielsweise fünf in einer Reihe vorgesehen sein, die gleichgroß sein könnten oder auch unterschiedliche Abmessungen aufweisen könnten.

Zusätzlich zu den zwischen den Modulen wirkenden Verbindungsmitteln könnte die erfindungsgemäße Leitungsdurchführung auch Befestigungsmittel aufweisen, die mit dem Randbereich der Wandöffnung zusammenwirken. Die Befestigungsmittel könnten jedem Modul zugeordnet sein und je nach Funktion und Anordnung des Moduls unterschiedlich ausgebildet sein.

Bei der Wirkverbindung mit dem Randbereich der Wandöffnung kommt es während der Montage der Module oder während der Montage der Tülle oder der Tülle mit Leitung oder der Leitung in der bereits vorhandenen Tülle oder der Leitung selbst zwischen benachbarten Modulen darauf an, dass die Module in der Wandöffnung in Richtung der Längsachse der Durchtrittsöffnung bzw. der Leitung gesichert sind. Während der Montage der Tüllen bzw. Leitungen in Modulen, die bereits der Wandöffnung zugeordnet sind, ist es erforderlich, dass die Module senkrecht, vertikal, zur Längsachse der Durchtrittsöffnung noch beweglich sind. Erst später, wenn die Leitungsmontage abgeschlossen ist, werden alle Module untereinander fest verbunden und es erfolgt die Verriegelung mit dem an die Wandöffnung anschließenden Randbereich.

Die Verbindungsmittel zur Verbindung der Module untereinander und auch die Befestigungsmittel zur Festlegung der Module bzw. der erfindungsgemäßen Leitungsdurchführung in der Wandöffnung könnten integrale Bestandteile des jeweiligen Moduls sein. Die Verbindungsmittel könnten mit dem Modul einstückig hergestellt sein oder auch unlösbar am Modul befestigt sein.

Die Module könnten je nach Funktion und Anordnung des Moduls in der Wandöffnung unterschiedlich ausgebildet sein. Die Module könnten ein oberes Abschlussmodul mit mindestens einer nach unten weisenden Aussparung umfassen, das mit dem oberen und seitlichen Randbereich der Wandöffnung zusammenwirkt. Zur Verriegelung der gesamten Leitungsdurchführung könnte das obere Abschlussmodul mindestens ein Befestigungsmittel umfassen. Das Befestigungsmittel könnte ein Drehhaken sein, dessen Haken den oberen Randbereich der Wandöffnung umgreift und eine Verschiebung vertikal senkrecht aufwärts zur Längsachse der Durchtrittsöffnung und in Richtung der Längsachse der Durchtrittsöffnung ausschließt.

Des Weiteren könnten die Module ein unteres Abschlussmodul mit mindestens einer nach oben öffnenden Aussparung umfassen, das mit dem unteren und seitlichen Randbereich der Wandöffnung zusammenwirkt. Zum Abstützen der gesamten Leitungsdurchführung gegen den unteren Rand der Wandöffnung könnte das untere Abschlussmodul Abstützhaken aufweisen, die den unteren Rand der Öffnung umgreifen und die Bewegung der Leitungsdurchführung vertikal senkrecht abwärts zur und in Richtung der Längsachse der Durchtrittsöffnung ausschließen. Schließlich könnten die Module mindestens ein Zwischenmodul umfassen, das mindestens eine nach oben und mindestens eine nach unten öffnende Aussparung aufweist und mit dem seitlichen Randbereich der Wandöffnung zusammenwirkt. Die seitliche Befestigung der Module, unabhängig davon, ob es sich um das obere oder untere Abschlussmodul oder um Zwischenmodule handelt, könnte ebenfalls durch Rasthaken realisiert werden. Die Rasthaken liegen an dem die Wandöffnung seitlich begrenzenden Randbereich der Wand an und sichern das Modul in Richtung der Längsachse der Durchtrittsöffnung bzw. der Leitung oder der Tülle, gewähren aber die Bewegung der Module in der Öffnung vertikal senkrecht zur Längsachse der Durchtrittsöffnung vor der endgültigen Verriegelung. Die zur seitlichen Verankerung verwendeten Rasthaken könnten an beiden Seiten der Module angebracht werden.

Wenn die geringste Bauhöhe der erfindungsgemäßen Leitungsdurchführung erreicht werden soll, könnte eine Kombination aus unterem und oberen Abschlussmodul gebildet werden. Außerdem ist es möglich, die Bauhöhe der Leitungsdurchführung je nach Bedarf durch beliebig viele Zwischenmodule zu erweitern. Alle Module sind mittels der Verbindungsmittel an der Vorderseite miteinander verbindbar und an der Rückseite mittels Befestigungsmittel in der Wandöffnung anordenbar.

Die bei den Modulen beschriebenen Aussparungen könnten in vorteilhafter Weise so beschaffen sein, dass die nach oben öffnenden Aussparungen im Querschnitt mehr als einen Halbkreis ausmachen und dass die nach unten öffnenden Aussparungen im Querschnitt weniger als einen Halbkreis ausmachen. Dabei könnten die Module auch zueinander passende Aussparungen unterschiedlicher Abmessungen für Leitungen und Tüllen kleineren oder größeren Querschnitts vorgesehen sein. In die nach oben öffnenden Aussparungen werden die für sich bekannten Tüllen mit oder ohne darin enthaltene Leitungen eingesetzt. Wenn die Aussparungen eine besondere abdichtende und fixierende Innenausgestaltung aufweisen, kann auf Tüllen auch verzichtet werden und die Leitungen können direkt in die Aussparungen eingesetzt werden.

Durch den größeren Umfang der nach oben öffnenden Aussparung, die die größte Außenabmessung der Tülle quasi übergreift, ist von vorn herein durch den Formschluss ein fester Sitz und die Unbeweglichkeit der Tülle in vertikaler Richtung gegeben. Bedingt durch den zwischen der Tülle und dem Modul erzeugten Formschluss ist die Tülle auch in Richtung der Längsachse der Leitung fixiert.

Die Tülle könnte aus einem Elastomer gefertigt sein, so dass diese deformierbar ist und mit einiger Kraftaufwendung der Formschluss mit der nach oben öffnenden Aussparung bei Bedarf auch wieder aufgehoben werden kann. Die Lösekraft erfordert eine definierte Tüllen-Einbring-Kraft, die so gewählt sein sollte, dass dies ohne Werkzeug möglich ist. Dadurch entsteht nach der Tüllen-Montage eine Haltekraft, die verhindert, dass die Tülle aus den nach oben öffnenden Aussparungen des jeweiligen Moduls herausrutschen kann, sondern bewirkt, dass die Tülle dort vorfixiert ist.

Die nach unten öffnenden Aussparungen nehmen quasi eine "Deckel"-Funktion wahr und ergänzen die nach oben öffnende Aussparung zur kreisrunden Durchtrittsöffnung. Diese vorteilhafte Ausgestaltung erleichtert die Arbeit des Monteurs, da sich die Tülle durch den festen Sitz nicht leicht aus der nach oben öffnenden Aussparung löst.

Die Tüllen könnten Längsschlitze aufweisen, über die die Leitung in die Tülle eingelegt wird. In der Regel werden die Tüllen im Vorfeld mit den Leitungen bestückt und in die nach oben öffnenden Aussparungen der Module eingesteckt.

Eine besonders bevorzugte Verbindungsmittel-Paarung könnten Drehverschlüsse einerseits und Ausnehmungen andererseits sein. Dabei könnte der Drehverschluss einen Haken aufweisen, dessen Hakenabschnitt in die Ausnehmung am anderen Modul eintaucht und dort verankert wird. Die Verrastung des Hakenabschnittes könnte dadurch erfolgen, dass die Ausnehmung eine Innenausgestaltung mit einer Kulisse und einer Mulde aufweist. Der Hakenabschnitt des Drehverschlusses könnte über die Kulisse geführt werden und dann in die Mulde einrasten.

Bei einer unterschiedlichen Gestaltung der Aussparungen, je nachdem, ob sie nach oben oder nach unten öffnen, bietet es sich an, Verbindungsmittel größerer Bauart, wie insbesondere die Drehverschlüsse, in einer Reihe mit den größeren, nach oben öffnenden Aussparungen anzuordnen. Kleinere Verbindungsmittel, wie die Ausnehmungen mit der Kulisse und der Mulde, könnten in einer Reihe mit den geometrisch kleineren, nach unten öffnen Aussparungen angeordnet sein.

Zwischen zwei benachbarten Modulen könnte ein Verbindungsmittelpaar wirken. Im Hinblick auf eine verbesserte, gleichmäßige Klemmwirkung über die gesamte Breite der Module könnten auch zwei Verbindungsmittelpaare vorgesehen sein. Besonders bevorzugt könnten die beiden Paare von Verbindungsmitteln zu beiden Seiten der Aussparungen vorgesehen sein.

Zusätzlich könnten die Module mit einer Dichtung versehen sein, die die Leitungsdurchführung gegen die Wand abdichtet. Zudem könnten auch die Module gegeneinander abgedichtet sein und gegen die Tüllen oder die Leitungen, je nach dem welcher Variante der Vorzug gegeben wird. Darüber hinaus könnte auch eine Abdichtung gegenüber den Drehhaken erfolgen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von drei Ausführungsbeispielen der Erfindung anhand der Zeichnung zu verweisen. In Verbindung mit der Erläuterung der angeführten Ausführungsbeispiele der Erfindung werden auch im Allgemeinen bevorzugte Ausgestaltungen und Weiterbildungen der Lehre erläutert. In der Zeichnung zeigen
- Fig. 1: in Perspektivdarstellung eine Vorderansicht eines ersten Ausführungsbeispiels der erfindungsgemäßen Leitungsdurchführung mit drei Modulen im Zusammenbau,
- Fig. 2: den Gegenstand aus Fig. 1 mit entgegen der Fügerichtung explosionsartig auseinandergezogenen, perspektivisch dargestellten Bauteilen,
- Fig. 3: in Perspektivdarstellung eine Rückansicht des Gegenstandes aus Fig. 1,
- Fig. 4: das untere Abschlussmodul des Gegenstandes aus Fig. 1 während der Montage in der Wandöffnung,
- Fig. 5: den Gegenstand aus Fig. 4, ergänzt mit Tüllen,
- Fig. 6: den Gegenstand aus Fig. 5, ergänzt mit einem Zwischenmodul,
- Fig. 7: den Gegenstand aus Fig. 6, ergänzt mit Tüllen im Zwischenmodul,
- Fig. 8: in Perspektivdarstellung eine Vorderansicht eines zweiten Ausführungsbeispiels der erfindungsgemäßen Leitungsdurchführung mit zwei Modulen im Zusammenbau und
- Fig. 9: in Perspektivdarstellung eine Vorderansicht eines dritten Ausführungsbeispiels der erfindungsgemäßen Leitungsdurchführung mit vier Modulen im Zusammenbau.

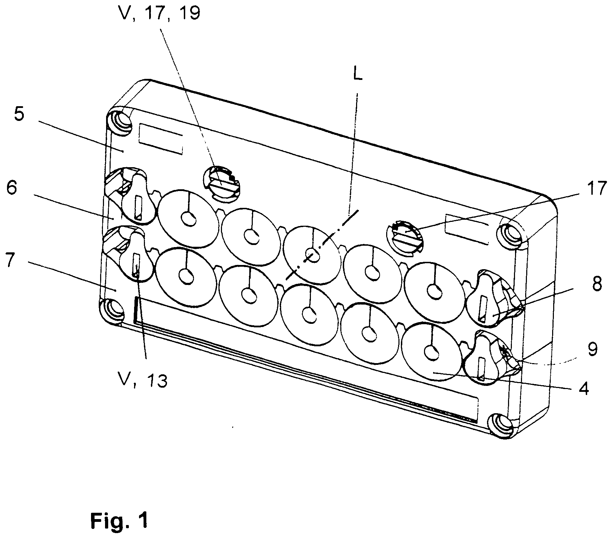

Die Figuren 1 bis 9 zeigen eine Leitungsdurchführung zur Festlegung in einer Wandöffnung 1. Die Leitungsdurchführung weist mehrere zweiteilige Durchtrittsöffnungen auf, die aus nach oben öffnenden Aussparungen 2 und nach unten öffnenden Aussparungen 3 der Module 5, 6, 7 gebildet sind. Die so gebildeten Durchtrittsöffnungen dienen der Aufnahme von Tüllen 4. Die Tüllen 4 weisen einen Längsschlitz 22 auf und dienen der Aufnahme der hier nicht gezeigten Leitung. Durch den Längsschlitz 22 wird die Leitung in die Tülle 4 eingeführt. Die Tülle 4 weist Abdichtkanten zur Leitung sowie zu den Modulen 5, 6, 7 auf.

Im ersten Ausführungsbeispiel gemäß den Fig. 1 bis 7 umfasst die Leitungsdurchführung drei miteinander verbindbare Module 5, 6, 7, nämlich ein oberes Abschlussmodul 5, ein Zwischenmodul 6 und ein unteres Abschlussmodul 7.

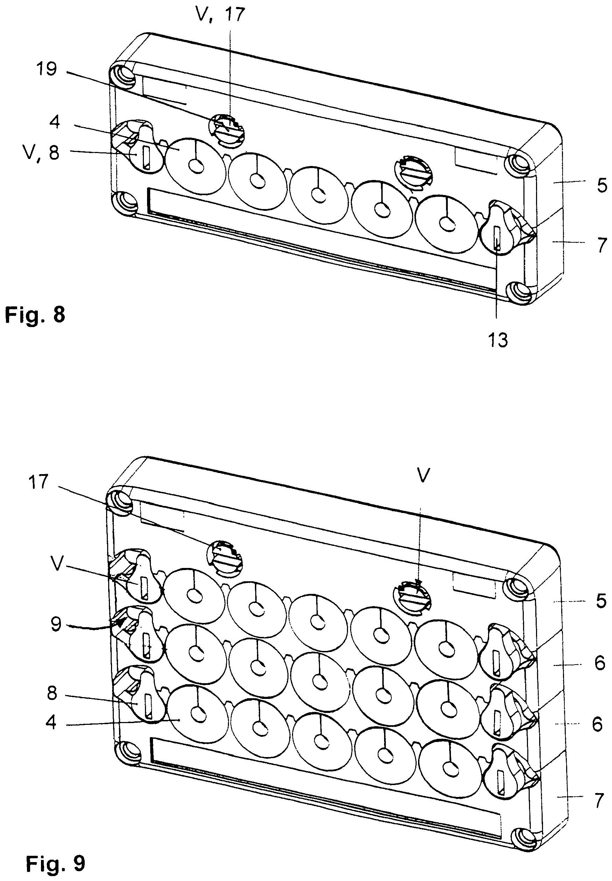

Im zweiten Ausführungsbeispiel gemäß Fig. 8 umfasst die Leitungsdurchführung zwei miteinander verbindbare Module 5, 7, nämlich ein oberes Abschlussmodul 5 und ein unteres Abschlussmodul 7.

Im dritten Ausführungsbeispiel gemäß Fig. 9 umfasst die Leitungsdurchführung vier miteinander verbindbare Module 5, 6, 7, nämlich ein oberes Abschlussmodul 5, zwei Zwischenmodule 6 und ein unteres Abschlussmodul 7.

Die Module 5, 6, 7 weisen Verbindungsmittel 8, 9 zur Ausbildung einer kraft- und formschlüssigen Verbindung - hier einer lösbaren Rastverbindung - zwischen zwei benachbarten Modulen 5, 6 oder 6, 7 oder 5, 7 auf.

Sind die Module 5, 6 oder 6, 7 oder 5, 7 nicht miteinander verbunden, können die Tüllen 4 aus den durch die Aussparungen 2, 3 gebildeten Durchtrittsöffnungen gelöst werden, nicht jedoch, wenn die Module 5, 6 oder 6, 7 oder 5, 7 miteinander verbunden sind.

Das Verbindungsmittel 8 ist als Drehverschluss 8 ausgebildet. Das Verbindungsmittel 9 ist eine Ausnehmung 9, die eine Kulisse 10 mit anschließender Mulde 11 umfasst. Der Hakenabschnitt 12 des Drehverschlusses 8 gleitet beim Verschließen über die Kulisse 10 der Ausnehmung 9, um dann in der Mulde 11 einzurasten. Die Betätigung des Drehverschlusses 8 erfolgt mittels eines Schraubendrehers, der in den Schlitz 13 des Drehverschlusses 8 eingreift. Die Drehverschlüsse 8 sind bereits in den Modulen 7 und 6 vormontiert.

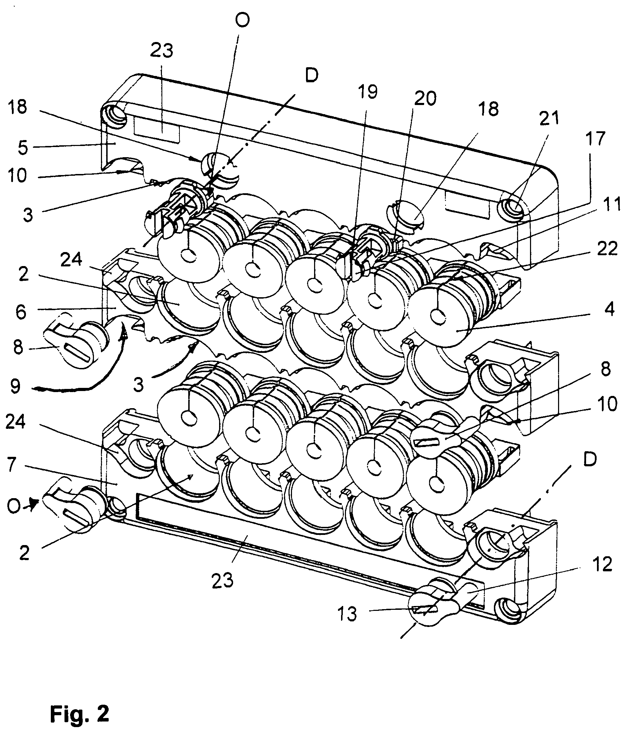

Der Drehverschluss 8 kann durch Drehen um eine Drehachse D (Fig. 2) in eine Offenstellung O und in eine Verschlussstellung V verbracht werden. In der Verschlussstellung V, die aus den Fig. 1, und 6 bis 9 ersichtlich ist, erstreckt sich der Drehverschluss 8 nebst Schlitz 13 vertikal senkrecht zu der in Fig. 1 gezeigten Längsachse L. Die Längsachse L bezieht sich auf die Leitung, die Tülle und die aus den zusammengefügten Aussparungen 2, 3 gebildete Durchtrittsöffnung. Während der Verbindung der Module 5, 6, 7 in der Verschlussstellung V des Drehverschlusses 8 sind die Tüllen 4 und damit auch die sich durch die Tüllen 4 hindurcherstreckenden, hier nicht eingezeichneten Leitungen verklemmt.

In der Offenstellung O erstreckt sich der Drehverschluss 8 in einem Winkel um ca. 70° zur Längsachse L, entsprechend der baulichen Vorgabe der taschenförmigen Ausnehmung 24, innerhalb der der Drehverschluss 8 in Offenstellung vollständig angeordnet ist. Die taschenförmige Ausnehmung 24 weist eine nicht näher bezeichnete Bohrung auf, in der der Drehverschluss 8 um die Drehachse D dreht.

Bei dem ersten Ausführungsbeispiel wird die Montage der mit den hier nicht dargestellten Leitungen vorkonfektionierten Tüllen 4 sukzessive pro Modul 5, 6, 7 innerhalb der Wandöffnung 1 vorgenommen. Zwischen den benachbarten Modulen 5, 6, 7 erfolgt die Betätigung der Verbindungsmittel 8, 9 nach der jeweiligen Bestückung mit den Tüllen 4 innerhalb der Wandöffnung 1. Die Tüllen- bzw. Leitungsmontage erfolgt von der Außenseite A der Wand 14. Die Verbindungsmittel 8, 9 werden an der Außenseite A der Wand 14 des hier nicht dargestellten Gehäuses betätigt.

Bei dem zweiten und dritten Ausführungsbeispiel werden alle Module 5, 7 oder 5, 6, 6, 7 mit den Tüllen 4 und mit den hier nicht dargestellten Leitungen bestückt und mittels der Verbindungsmittel 8, 9 außerhalb der Wandöffnung 1 miteinander verbunden. Die so erhaltene Leitungsdurchführung wird danach komplett in die Wandöffnung 1 eingesetzt und mit der Wand 14 über die rückwärtigen, dann zur Innenseite I weisenden Befestigungsmittel 15, 16, 17 verbunden.

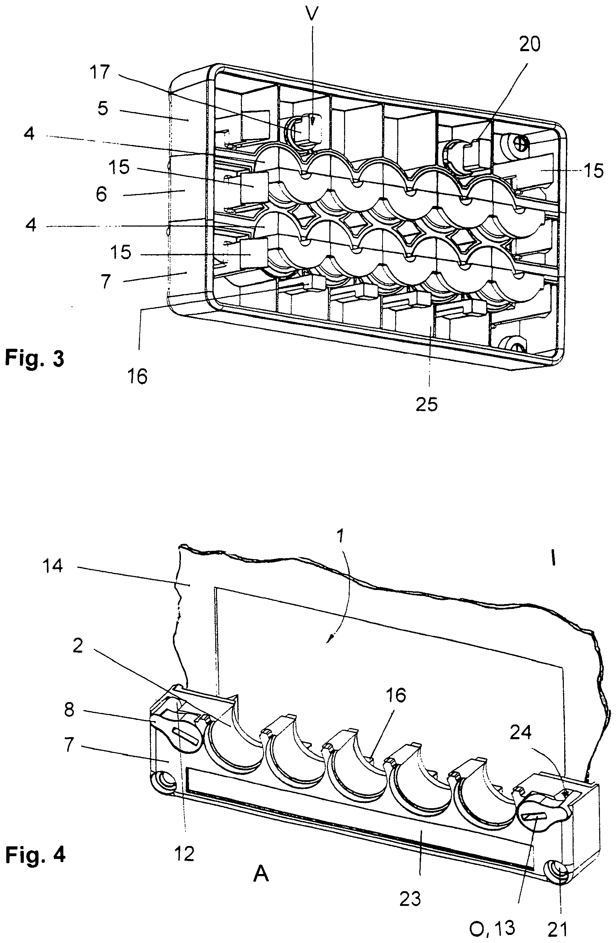

In Fig. 3 ist die Rückseite der Leitungsdurchführung gemäß dem ersten Ausführungsbeispiel gezeigt. Die Befestigungsmittel 15, 16, 17 der Module 5, 6, 7 sind unterschiedlich gestaltet, haben aber gemeinsam, dass sie am Ende der Leitungsdurchführungsmontage in der Wandöffnung 1 den Randbereich der Wandöffnung 1 der Wand 14 umgreifen und so eine Verschiebung der Module 5, 6, 7 in Richtung der Längsachse L und senkrecht zur Längsachse L - sowohl vertikal als auch horizontal - ausschließen.

Die Module 5, 6, 7 weisen unterschiedliche aufeinander abgestimmte Formgebungen und Funktionen auf.

Das Modul 7 ist bei allen Ausführungsbeispielen als unteres Abschlussmodul 7 ausgebildet, welches fünf nebeneinander liegende, nach oben öffnende Aussparungen 2 aufweist und mit Verbindungsmitteln 8 an der Vorderseite und Befestigungsmitteln 15 und 16 an der Rückseite ausgestattet ist.

Anhand der Fig. 3 und 4 ist der erste Montageschritt gemäß dem ersten Ausführungsbeispiel der erfindungsgemäßen Leitungsdurchführung dargestellt. Das untere Abschlussmodul 7 wird mit den Befestigungsmitteln 16 in die Wandöffnung 1 in gegenüber dem unteren Randbereich der Wandöffnung 1 erhöhter Position eingeführt. Die insgesamt vier Befestigungsmittel 16 sind als Abstützhaken 16 ausgebildet. Wenn die Position des unteren Abschlussmoduls 7 in Richtung der Längsachse L erreicht ist, kann dieses nach unten geschoben werden, bis die vier Abstützhaken 16 auf dem unteren Randbereich der Wandöffnung 1 der Wand 14 aufstoßen bzw. sich auf diesem abstützen und diesen mit ihren hakenförmigen Enden umgreifen. Damit ist die Montageposition des unteren Abschlussmoduls 7 erreicht. Die Bewegung des unteren Abschlussmoduls 7 ist durch die Abstützhaken 16 in Richtung der Längsachse L und senkrecht vertikal nach unten zur Längsachse L blockiert.

Die Abstützhaken 16 sind starr ausgebildet, was durch eine an der Rückseite des unteren Abschlussmoduls 7 befindliche Abstützrippe 25 verstärkt wird.

Um ein Herausdrehen des unteren Abschlussmoduls 7 aus der Wandöffnung 1 zu vermeiden, ist das untere Abschlussmodul 7 zudem an beiden Seiten mit Befestigungsmitteln 15 in Form von Rasthaken 15 versehen. Beim Einsetzen des unteren Abschlussmoduls 7 in die Wandöffnung 1 werden die Rasthaken 15 zunächst von der Wand 14 zurückgedrückt, bis das untere Abschlussmodul 7 in Richtung der Längsachse L die Montageposition erreicht hat. Dann rasten die Rasthaken 15 ein und fixieren das untere Abschlussmodul 7 zusätzlich in der Wandöffnung 1. Dabei liegen die Rasthaken 15 an den beiden seitlichen Randbereichen der Wandöffnung 1 der Wand 14 an und umgreifen diese mit ihren hakenförmigen Enden, die zur Innenseite I weisen. Die Rasthaken 15 erlauben die vertikale Verschiebung des unteren Abschlussmoduls 7 in der Wandöffnung 1 senkrecht nach oben bezogen auf die Längsachse L.

Das untere Abschlussmodul 7 weist zu beiden Seiten der reihenförmig angeordneten Aussparungen 2 je einen Drehverschluss 8 auf.

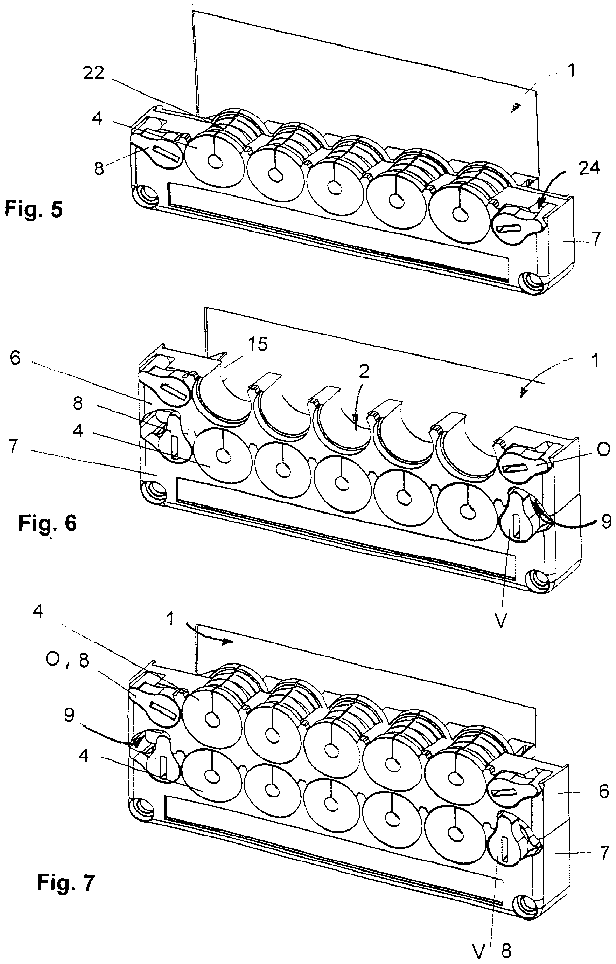

Die Fig. 5 zeigt den zweiten Montageschritt, wobei die Tüllen 4 mit den hier nicht gezeigten Leitungen in die nach oben öffnenden Aussparungen 2 des unteren Abschlussmoduls 7 eingesetzt sind. Die Formgebung der Aussparung 2, die im Querschnitt mehr als einen Halbkreis beschreibt, stellt sicher, dass mehr als die Hälfte der Tülle 4 aufgenommen wird, die dadurch formschlüssig in vertikaler Richtung gehalten wird. Da die Tülle 4 aus einem Elastomer besteht, ist sie verformbar und in die Aussparung 2 eindrückbar und sitzt fest und verschiebesicher in Richtung der Längsachse L.

Das Modul 6 ist bei dem ersten Ausführungsbeispiel einfach und dritten Ausführungsbeispiel zweifach vorhanden und als Zwischenmodul 6 ausgebildet, welches fünf nach oben öffnende Aussparungen 2 und fünf nach unten öffnende Aussparungen 3 aufweist und mit je zwei Verbindungsmitteln 8 und 9 an der Vorderseite und je zwei Befestigungsmitteln 15 an der Rückseite ausgestattet ist. Die nach unten öffnenden Aussparungen 3 machen im Querschnitt weniger als einen Halbkreis aus und üben quasi eine "Deckelfunktion" aus, wenn die Durchtrittsöffnung vollständig ausgebildet ist.

Anhand der Fig. 3 und 6 ist der dritte Montageschritt gemäß dem ersten Ausführungsbeispiel der erfindungsgemäßen Leitungsdurchführung dargestellt. Das Zwischenmodul 6 wird vertikal erhöht zur Montageposition in Richtung der Längsachse L mit der Orientierung zur Innenseite I in die Wandöffnung 1 eingeführt. Die Befestigungsmittel 15 / Rasthaken 15 sind zu beiden Seiten der beiden Reihen an Aussparungen 2, 3 angebracht. Das Zwischenmodul 6 wird solang in der Wandöffnung 1 positioniert, bis die Rasthaken 15 mit dem jeweiligen seitlichen Randbereich der Wandöffnung 1 zusammenwirken, diesen umgreifen und dabei an der Innenseite I an der Wand 14 einrasten. Die beiden Befestigungsmittel 15 erlauben eine vertikale Bewegung des Zwischenmoduls 6 senkrecht zur Längsachse L und sichern das Zwischenmodul 6 in Richtung der Längsachse L. Das Zwischenmodul 6 wird nun soweit nach unten geschoben, bis es an das untere Abschlussmodul 7 anstößt und die Ausnehmungen 9 auf die Drehverschlüsse 8 bzw. deren taschenförmige Ausnehmungen 24 auftreffen.

In Fig. 6 ist gezeigt, dass das Zwischenmodul 6 auf das untere Abschlussmodul 7 mit den Tüllen 4 aufgepresst und bereits mittels der Verbindungsmittel 8, 9 verriegelt ist. Die Verbindung zwischen den Modulen 7 und 6 ist hergestellt und die beiden Drehverschlüsse 8 des unteren Abschlussmoduls 7 wirken mit den beiden Ausnehmungen 9 des Zwischenmoduls 6 zusammen. Die beiden Zwischenmodule 6 des dritten Ausführungsbeispiels gemäß Fig. 9 sind identisch ausgebildet.

Nun werden die beiden Drehverschlüsse 8 des unteren Abschlussmoduls 7 betätigt. Diese bewegen sich aus den taschenförmigen Ausnehmungen 24 im unteren Abschlussmodul 7 in die Kulisse 10 der Ausnehmung 9 des Zwischenmoduls 6. Die Kulisse 10 ist hier so ausgeführt, dass der Mittelpunkt des Kulissenkrümmradius oberhalb des Radius der Kreisbahn liegt, auf der sich der Hakenabschnitt 12 des Drehverschlusses 8 bewegt. Damit wird erreicht, dass der Drehverschluss 8 zunächst kräftefrei in die Ausnehmung 9 eintauchen kann, sich dann aber im Kontakt mit der Kulisse 10 eine Vorspannung zwischen dem unteren Abschlussmodul 7 und dem mittleren Zwischenmodul 6 aufbaut. Die Mulde 11, die auf die Kulisse 10 folgt, stimmt in ihren Abstandsabmessungen zum Drehverschluss 8 während des Zusammenbaus der beiden Module 7 und 6 mit dem Radius der Kreisbahn überein, auf der sich der Hakenabschnitt 12 des Drehverschlusses 8 bewegt. Durch die Mulde 11 wird zum einen erreicht, dass zum Öffnen des Drehverschlusses 8 ein Widerstand zu überwinden ist und somit gewährleistet ist, dass sich der Drehverschluss 8 nicht selbsttätig öffnet und dass die Anlage zwischen dem Zwischenmodul 6 und dem Drehverschluss 8 des unteren Abschlussmoduls 7 eine Fläche bildet. Dadurch wird die Flächenpressung minimiert und damit der Abbau der Vorspannung durch Relaxation der hier aus Kunststoff hergestellten Bauteile. Bei geschlossenen Drehverschlüssen 8 in der vertikalen Verschlussstellung V sind die Tüllen 4 und auch die darin befindlichen Leitungen bereits mit Vorspannung beaufschlagt und damit befestigt und abgedichtet.

Die Fig. 7 zeigt den vierten Montageschritt, wobei die Tüllen 4 mit den Leitungen in die Aussparungen 2 des Zwischenmoduls 6 eingesetzt sind. Dieser Schritt entspricht dem in Fig. 5 gezeigten zweiten Montageschritt.

Das Modul 5 ist bei allen Ausführungsbeispielen als oberes Abschlussmodul 5 ausgebildet, welches fünf nach unten öffnende Aussparungen 3 aufweist und mit zwei Verbindungsmitteln 9 an der Vorderseite, zwei Befestigungsmitteln 15 an der Rückseite und mit zwei von der Vorderseite betätigbaren Befestigungsmitteln 17 an der Rückseite ausgestattet ist. In Fig. 1 ist das Resultat des fünften Montageschritts dargestellt, wobei bezüglich der Wand 14 auf deren Darstellung in Fig. 4 verwiesen wird.

Die als Rasthaken 15 vorliegenden Befestigungsmittel 15 des oberen Abschlussmoduls 5 haben dieselbe Ausgestaltung und Funktion wie die Rasthaken 15 der Module 7, 6 und erlauben die vertikale Bewegung des oberen Abschlussmoduls 5.

Die Ausnehmungen 9 des oberen Abschlussmoduls 5 haben dieselbe Funktion und Ausgestaltung wie die Ausnehmungen 9 des Zwischenmoduls 6. Das Zusammenwirken der Ausnehmungen 9 des oberen Abschlussmoduls 5 mit den Drehverschlüssen 8 des Zwischenmoduls erfolgt analog zum dritten Montageschritt.

Die nach unten öffnenden Aussparungen 3 haben dieselbe Funktion und Ausgestaltung wie die des Zwischenmoduls 6 und ergänzen die nach oben öffnenden Aussparungen 2 des Zwischenmoduls 6 zur Durchtrittsöffnung für Tülle 4 und Leitung.

Die Befestigungsmittel 17 des oberen Abschlussmoduls 5 sind als Drehhaken 17 ausgebildet und sitzen unverlierbar in Öffnungen 18 des oberen Abschlussmoduls 5. Die Drehhaken 17 weisen einen Schlitz 19 für einen Schraubendreher an der Vorderseite und einen Hakenabschnitt 20 an der Rückseite des oberen Abschlussmoduls 5 auf und sind bereits im oberen Abschlussmodul 5 vormontiert.

Die hakenförmige Geometrie dient dem Umgreifen des oberen Randbereiches der Wandöffnung 1 der Wand 14. Die Drehhaken 17 nehmen zum Zweck der Montage des oberen Abschlussmoduls 5 in der Wandöffnung 1 eine Offenstellung O und zur Verriegelung der Leitungsdurchführung in der Wandöffnung 1 der Wand 14 eine Verschlussstellung V ein.

Die Hakenabschnitte 20 der Drehhaken 17 sind in der Offenstellung O so positioniert, dass diese in Richtung der Längsachse L bereits in die Wandöffnung 1 eintauchen, aber zwischen Hakenabschnitt 20 und Wand 14 ein Abstand bleibt. Dies ermöglicht eine vertikal erhöhte Montageposition des oberen Abschlussmoduls 5.

Zur Einnahme der verschiedenen Offen- und Verschlussstellungen O und V werden die Drehhaken 17 gedreht. In der in Fig. 2 gezeigten Offenstellung O mit horizontal positionierten Hakenabschnitten 20 der Drehhaken 17 ist die Montage des oberen Abschlussmoduls 5 in Richtung der Längsachse L in die Wandöffnung 1 möglich.

In Fig. 3 ist die Verschlussstellung V der Drehhaken 17 mit vertikal positionierten und um 90 ° zur Offenstellung O gedrehten Hakenabschnitten 20 gezeigt. In der Verschlussstellung V können die Hakenabschnitte 20 den oberen Randbereich der Wandöffnung 1 der in Fig. 4 symbolisch dargestellten Wand 14 umgreifen und so das obere Abschlussmodul 5 in Richtung der Längsachse L und senkrecht zur Längsachse L fixieren. Durch die Abstützhaken 16 am unteren Abschlussmodul 7 und die Drehhaken 17 am oberen Abschlussmodul 5 wird die Leitungsdurchführung in der Wand 14 verspannt und erhält damit eine vertikale Pressung, die die durch die Verbindungsmittel 8, 9 - Drehverschlüsse 8 und Ausnehmungen 9 - hergestellte Verpressung der Module 5, 6, 7 unterstützt. Die Leitungsdurchführung ist nun fest in der Wandöffnung 1 befestigt und eine vertikale Verschiebung ist nun auch ausgeschlossen.

Für den Fall, dass die Stärke einer anderen Wand als die der Wand 14 nicht mit den Befestigungsmitteln 15, 16, 17 kompatibel ist, kann eine Verschraubung der Leitungsdurchführung mit der Wand größerer Wandstärke über die vorsorglich vorgesehenen Eckbohrungen 21 durchgeführt werden. Die Eckbohrungen 21 sind bis zu ihrer Erstbenutzung verschlossen und werden bei Bedarf mit einem Werkzeug durchstoßen.

In den Fig. 1, 8, 9 sind die drei Ausführungsbeispiele der Leitungsdurchführung im zusammengebauten Zustand erkennbar.

Bei allen Ausführungsbeispielen sind den Modulen 7 und 6 mit nach oben öffnenden Aussparungen 2 die Drehverschlüsse 8 zugeordnet und den Modulen 5 und 6 mit nach unten öffnenden Aussparungen 3 sind die die Verrastung ermöglichenden Ausnehmungen 9 zugeordnet.

Mit 23 sind Felder an den unteren und oberen Abschlussmodulen 5, 7 zur Aufnahme von Informationen bezeichnet.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt ist. Beispielsweise können die Verbindungsmittel oder die Befestigungsmittel variieren und anderen Bewegungsprinzipen folgen.

## Patentansprüche

1. Leitungsdurchführung zur Festlegung in einer Wandöffnung (1), umfassend mindestens zwei miteinander verbindbare Module (5, 6, 7) und mindestens eine Durchtrittsöffnung zur Durchführung einer Leitung, wobei die Durchtrittsöffnung im montierten Zustand durch Aussparungen (2, 3) zweier benachbarter Module (5, 6, 7) gebildet ist, wobei die Module (5, 6, 7) Verbindungsmittel (8, 9) zur Ausbildung einer kraft- und / oder formschlüssigen Verbindung zwischen zwei benachbarten Modulen (5, 6, 7) aufweisen, wobei die Leitung während der Verbindung der beiden benachbarten Module (5, 6, 7) verklemmt ist und wobei die Verbindungsmittel (8, 9) außerhalb der Wandöffnung (1) betätigbar sind,
**dadurch gekennzeichnet,**
**dass** die Verbindungsmittel (8, 9) auch innerhalb der Wandöffnung (1) betätigbar sind.

2. Leitungsdurchführung nach Anspruch 1, **dadurch gekennzeichnet, dass** die Verbindung zwischen den benachbarten Modulen (5, 6, 7) lösbar ist.

3. Leitungsdurchführung nach Anspruch 1 oder 2, **dadurch gekennzeichnet, dass** die Module (5, 6, 7) einzeln oder in Verbindung mit weiteren Modulen (6) in die Wandöffnung (1) einsetzbar sind.

4. Leitungsdurchführung nach einem der Ansprüche 1 bis 3, **dadurch gekennzeichnet, dass** die Verbindungsmittel (8, 9) in Form von Rastmitteln vorliegen.

5. Leitungsdurchführung nach einem der Ansprüche 1 bis 4, **dadurch gekennzeichnet, dass** die zwischen den Modulen (5, 6, 7) wirkenden Verbindungsmittel (8, 9) bei in die Wandöffnung (1) eingesetzten benachbarten Modulen (5, 6, 7) von der zur Wandöffnung (1) benachbarten Außenseite (A) eines Gehäuses oder Schrankes her betätigbar sind.

6. Leitungsdurchführung nach einem der Ansprüche 1 bis 5, **dadurch gekennzeichnet, dass** jedes Modul (5, 6, 7) Befestigungsmittel (15) aufweist, die mit den seitlichen Randbereichen der Wandöffnung (1) so zusammenwirken, dass die Module (5, 6, 7) in der Wandöffnung (1) in Richtung der Längsachse (L) der Durchtrittsöffnung bzw. der Leitung festgelegt sind.

7. Leitungsdurchführung nach einem der Ansprüche 1 bis 6, **dadurch gekennzeichnet, dass** die Module (5, 6, 7) ein oberes Abschlussmodul (5) mit mindestens einer nach unten öffnenden Aussparung (3) umfassen, das mit dem oberen und den seitli chen Randbereichen der Wandöffnung (1) zusammenwirkt.

8. Leitungsdurchführung nach einem der Ansprüche 1 bis 7, **dadurch gekennzeichnet, dass** die Module (5, 6, 7) ein unteres Abschlussmodul (7) mit mindestens einer nach oben öffnenden Aussparung (2) umfassen, das mit dem unteren und den seitlichen Randbereichen der Wandöffnung zusammenwirkt.

9. Leitungsdurchführung nach einem der Ansprüche 1 bis 8, **dadurch gekennzeichnet, dass** die Module (5, 6, 7) mindestens ein Zwischenmodul (6) umfassen, das mindestens eine nach oben und mindestens eine nach unten öffnende Aussparung (2, 3) aufweist und mit den seitlichen Randbereichen der Wandöffnung (1) zusammenwirkt.

10. Leitungsdurchführung nach Anspruch 9, **dadurch gekennzeichnet, dass** die nach oben öffnenden Aussparungen (2) im Querschnitt mehr als einen Halbkreis ausmachen und dass die nach unten öffnenden Aussparungen (3) im Querschnitt weniger als einen Halbkreis ausmachen

11. Leitungsdurchführung nach einem der Ansprüche 9 oder 10, **dadurch gekennzeichnet, dass** die Verbindungsmittel (8) als Drehverschluss (8) mit schwenkbarem Haken vorliegen und dass das Verbindungsmittel (9) in Form einer Ausnehmung (9) vorliegt.

12. Leitungsdurchführung nach Anspruch 11, **dadurch gekennzeichnet, dass** das Verbindungsmittel (9) in Form einer Ausnehmung (9) eine Kulisse (10) mit einer Mulde (11) zum Einrasten eines Hakenabschnitts (12) des Drehverschlusses (8) umfasst.

13. Leitungsdurchführung nach einem der Ansprüche 1 bis 12, **dadurch gekennzeichnet, dass** die Verbindungsmittel (8) den Modulen (6, 7) mit nach oben öffnender Aussparung (2) zugeordnet sind und dass das Verbindungsmittel (9) den Modulen (5, 6) mit nach unten öffnender Aussparung (3) zugeordnet ist.

14. Leitungsdurchführung nach einem der Ansprüche 1 bis 13, **dadurch gekennzeichnet, dass** zwischen zwei benachbarten Modulen (5, 6; 5, 7 ; 6, 7) zwei Paare von Verbindungsmitteln (8, 9) vorgesehen sind, die sich vorzugsweise zu beiden Seiten der Aussparungen (2, 3) erstrecken.

## Claims

1. A line feedthrough for fixing in a wall opening (1), comprising at least two interconnectable modules (5, 6, 7) and at least one through-opening for feeding through a line, the through-opening in the assembled condition being formed by recesses (2, 3) in two adjacent modules (5, 6, 7), the modules (5, 6, 7) having connecting means (8, 9) for forming a frictional and/or interlocking connection between two adjacent modules (5, 6, 7), the line being clamped during the connection of the two adjacent modules (5, 6, 7), and the connecting means (8, 9) being actuatable outside the wall opening (1),
**characterised in that**
the connecting means (8, 9) are also actuatable inside the wall opening (1).

2. The line feedthrough according to Claim 1,
**characterised in that**
the connection between the adjacent modules (5, 6, 7) can be undone.

3. The line feedthrough according to Claim 1 or 2,
**characterised in that**
the modules (5, 6, 7) can be inserted into the wall opening (1) individually or in conjunction with other modules (6).

4. The line feedthrough according to any one of Claims 1 to 3,
**characterised in that**
the connecting means (8, 9) are in the form of latching means.

5. The line feedthrough according to any one of Claims 1 to 4,
**characterised in that**
the connecting means (8, 9) effective between the modules (5, 6, 7) when the adjacent modules (5, 6, 7) are inserted into the wall opening (1) can be actuated from the outer side (A), adjacent to the wall opening (1), of a housing or cabinet.

6. The line feedthrough according to any one of Claims 1 to 5,
**characterised in that**
each module (5, 6, 7) has fastening means (15) which interact with the lateral edge regions of the wall opening (1) such that the modules (5, 6, 7) are fixed in the wall opening (1) in the direction of the longitudinal axis (L) of the through-opening or of the line.

7. The line feedthrough according to any one of Claims 1 to 6,
**characterised in that**
the modules (5, 6, 7) comprise an upper terminating module (5) with at least one recess (3) which is open at the bottom and interacts with the upper and lateral edge regions of the wall opening (1).

8. The line feedthrough according to any one of Claims 1 to 7,
**characterised in that**
the modules (5, 6, 7) comprise a lower terminating module (7) with at least one recess (2) which is open at the top and interacts with the lower and lateral edge regions of the wall opening.

9. The line feedthrough according to any one of Claims 1 to 8,
**characterised in that**
the modules (5, 6, 7) comprise at least one intermediate module (6) which has at least one recess (2) which is open at the top and at least one recess (3) which is open at the bottom and interacts with the lateral edge regions of the wall opening (1).

10. The line feedthrough according to Claim 9,
**characterised in that**
the recesses (2) which are open at the top form more than a semi-circle in cross-section, and the recesses (3) which are open at the bottom form less than a semi-circle in cross-section.

11. The line feedthrough according to one of Claims 9 or 10,
**characterised in that**
the connecting means (8) are in the form of a rotary closure (8) with a pivotable hook, and the connecting means (9) is in the form of a cut-out (9).

12. The line feedthrough according to Claim 11,
**characterised in that**
the connecting means (9) in the form of a cut-out (9) comprises a slotted guide (10) with a depression (11) for latching a hook section (12) of the rotary closure (8) .

13. The line feedthrough according to any one of Claims 1 to 12,
**characterised in that**
the connecting means (8) are assigned to the modules (6, 7) with a recess (2) which is open at the top, and the connecting means (9) is assigned to the modules (5, 6) with a recess (3) which is open at the bottom.

14. The line feedthrough according to any one of Claims 1 to 13,
**characterised in that**
between each pair of adjacent modules (5, 6; 5, 7; 6, 7) there are two pairs of connecting means (8, 9), which preferably extend to both sides of the recesses (2, 3).

## Revendications

1. Passage de câble, destiné à être immobilisé dans une ouverture murale (1), comprenant au moins deux modules (5, 6, 7) susceptibles d'être assemblés les uns aux autres et au moins un orifice de passage, pour faire passer un câble, en position montée, l'orifice de passage étant formé par deux échancrures (2, 3) dans deux modules (5, 6, 7) voisins, les modules (5, 6, 7) comportant des moyens d'assemblage (8, 9) destinés à créer un assemblage par complémentarité de force et/ou de forme entre deux modules (5, 6, 7) voisins, pendant l'assemblage des deux modules (5, 6, 7) voisins, le câble étant coincé et les moyens d'assemblage (8, 9) étant susceptibles d'être mis en action à l'extérieur de l'ouverture murale (1),
**caractérisé**
**en ce que** les moyens d'assemblage (8, 9) sont également susceptibles d'être mis en action à l'intérieur de l'ouverture murale (1).

2. Passage de câble selon la revendication 1,
**caractérisé**
**en ce que** l'assemblage entre les modules (5, 6, 7) voisins est désolidarisable.

3. Passage de câble selon la revendication 1 ou 2,
**caractérisé**
**en ce que** les modules (5, 6, 7) sont insérables dans l'ouverture murale (1) individuellement ou en association avec des modules (6) supplémentaires.

4. Passage de câble selon l'une quelconque des revendications 1 à 3,
**caractérisé**
**en ce que** les moyens d'assemblage (8, 9) se présentent sous la forme de moyens d'enclenchement.

5. Passage de câble selon l'une quelconque des revendications 1 à 4,
**caractérisé**
**en ce que** lorsque des modules (5, 6, 7) voisins sont insérés dans l'ouverture murale (1), les moyens d'assemblage (8, 9) agissant entre les modules (5, 6, 7) sont susceptibles d'être mis en action à partir de la face extérieure (A) voisine de l'ouverture murale (1) d'un boîtier ou d'une armoire.

6. Passage de câble selon l'une quelconque des revendications 1 à 5,
**caractérisé**
**en ce que** chaque module (5, 6, 7) comporte des moyens de fixation (15) qui coopèrent avec des zones marginales latérales de l'ouverture murale (1), de telle sorte que les modules (5, 6, 7) dans l'ouverture murale (1) soient immobilisés dans la direction de l'axe longitudinal (L) de l'orifice de passage ou du câble.

7. Passage de câble selon l'une quelconque des revendications 1 à 6,
**caractérisé**
**en ce que** les modules (5, 6, 7) comprennent un module de terminaison (5) supérieur pourvu d'au moins une échancrure (3) s'ouvrant vers le bas, qui coopère avec la zone marginale supérieure et les zones marginales latérales de l'ouverture murale (1).

8. Passage de câble selon l'une quelconque des revendications 1 à 7,
**caractérisé**
**en ce que** les modules (5, 6, 7) comprennent un module de terminaison (7) inférieur, pourvu d'au moins une échancrure (2) s'ouvrant vers le haut, qui coopère avec la zone marginale inférieure et les zones marginales latérales de l'ouverture murale.

9. Passage de câble selon l'une quelconque des revendications 1 à 8,
**caractérisé**
**en ce que** les modules (5, 6, 7) comprennent au moins un module intermédiaire (6) qui comporte au moins une échancrure (2, 3) s'ouvrant vers le haut et une autre s'ouvrant vers le bas et qui coopère avec les zones marginales latérales de l'ouverture murale (1).

10. Passage de câble selon la revendication 9,
**caractérisé**
**en ce qu'**en section transversale, les échancrures (2) s'ouvrant vers le haut correspondent à plus d'un demi-cercle et **en ce qu'**en section transversale, les échancrures (3) s'ouvrant vers le bas correspondent à moins d'un demi-cercle.

11. Passage de câble selon l'une quelconque des revendications 9 ou 10,
**caractérisé**
**en ce que** les moyens d'assemblage (8) se présentent sous la forme d'une fermeture rotative (8) pourvue d'un crochet pivotant et **en ce que** le moyen d'assemblage (9) se présente sous la forme d'un évidement (9).

12. Passage de câble selon la revendication 11,
**caractérisé**
**en ce que** le moyen d'assemblage (9) sous la forme d'un évidement (9) comprend une coulisse (10) pourvue d'un creux (11), pour l'enclenchement d'une partie de crochet (12) de la fermeture rotative (8).

13. Passage de câble selon l'une quelconque des revendications 1 à 12,
**caractérisé**
**en ce que** les moyens d'assemblage (8) sont associés aux modules (6, 7) pourvus d'une échancrure (2) s'ouvrant vers le haut et **en ce que** le moyen d'assemblage (9) est associé aux modules (5, 6) pourvus d'une échancrure (3) s'ouvrant vers le bas.

14. Passage de câble selon l'une quelconque des revendications 1 à 13,
**caractérisé**
**en ce qu'**entre deux modules voisins (5, 6 ; 5, 7 ; 6, 7) sont prévues deux paires de moyens d'assemblage (8, 9) qui s'étendent de préférence vers les deux côtés des échancrures (2, 3).
